# EUROPEAN PATENT SPECIFICATION

(11) **EP 3 001 542 B1**
(45) Date of publication and mention of the grant of the patent: **11.03.2020**
(21) Application number: 14382367.2
(22) Date of filing: 26.09.2014
(51) Int. Cl.: H02K 1/27, H02K 7/18

(54) **Permanent magnet rotors**
Permanentmagnetrotoren
Rotors à aimant permanent

(43) Date of publication of application: 30.03.2016
(73) Proprietor: GE Renewable Technologies Wind B.V., 4817 PA Breda (NL)
(72) Inventor: Bueno de Santiago, Adrian, 08005 Barcelona (ES); Urresty, Julio César, 08029 Barcelona (ES); Claramunt Estecha, Santiago, 08028 Barcelona (ES); Muñiz Casais, César, 08552 Taradell (ES)
(74) Representative: de Rooij, Mathieu Julien

(56) References cited:
- EP-A1- 2 523 316
- EP-A1- 2 645 537
- EP-A1- 2 680 401
- EP-A2- 2 763 285
- WO-A1-2013/168295
- WO-A1-2013/178942
- DE-A1-102011 000 439
- US-A1- 2014 103 768

## Description

The present disclosure relates to permanent magnet rotors for electrical machines. The present disclosure also relates to permanent magnet generator rotors especially suitable for wind turbines, and to wind turbines comprising such a permanent magnet generator rotor.

### BACKGROUND ART

Electrical machines, such as motors and generators having a rotor with permanent magnets are known. They are generally deemed to be reliable and require less maintenance than other generator typologies.

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft either directly drives the generator rotor ("directly driven") or through the use of a gearbox. Particularly for offshore wind turbines, direct drive systems employing permanent magnets are usually chosen.

Such a direct drive wind turbine generator may have e.g. a diameter of 6 - 8 meters and a length of e.g. 2 - 3 meters. Hundreds of magnets may need to be attached, e.g. by screwing or gluing to the circumference of the rotor. It will be clear that this manufacturing process can be cumbersome.

Furthermore, if one or more magnets is damaged and needs to be replaced, the access to these magnets can be complicated (especially with large size generators), such that maintenance can become very expensive.

However, this size and type of generator is not limited to offshore applications, and not even to the field of wind turbines only. Generators of considerable dimensions that may suffer from the same problems and/or have the same complications may also be found e.g. in steam turbines and water turbines. Also relatively large permanent magnet motors may have the same or similar problems.

The permanent magnets may be made e.g. from AINiCo steel (AluminiumNickel-Cobalt) or rare earth magnetic materials such as neodymium (NdFeB), or samarium-cobalt. These materials may be relatively expensive. For this reason, it is important that the permanent magnets have the minimum size required and that loss of magnetic flux of the permanent magnets of the rotor is reduced to a minimum.
WO2014001512 addresses this problem by diminishing magnetic flux losses through the introduction of (cheaper) auxiliary magnets. WO2014001512 discloses a permanent magnet rotor comprising a rotor body configured for rotating around a central rotational axis and further comprises principal permanent magnets that are substantially rectangular in axial cross-section and are embedded in the rotor body and are arranged inclined with respect to the radial plane extending through the center of the principal magnets and such as to have a circumferential magnetic orientation. The principal magnets have an inner end and an outer end, the outer end being arranged in the proximity of the air gap of the outer circumference of the rotor, and outer bridges of magnetically conductive material being formed between the outer ends of the principal magnets and the outer circumference of the rotor. Auxiliary (cheaper) magnets are arranged near the outer ends of the principal magnets to magnetically saturate the outer bridges.
EP2645537 addresses the problem of cooling the permanent magnets in magnet modules in different examples of magnet modules. In one of these examples, EP2645537 discloses a permanent magnet rotor comprising a rotor rim and a plurality of magnet modules arranged on the outer or inner circumference of the rotor rim, the magnet modules comprising permanent magnets that are substantially rectangular in axial cross-section and are embedded in the magnet module and are arranged inclined with respect to the radial plane extending through the center of the principal magnets and such as to have a circumferential magnetic orientation. The magnet modules further comprise an axial cooling channel extending substantially along the length of the modules.
This may represent an improvement with respect to other prior art solutions. However, in some cases further improvements may be required.
The purpose of the present disclosure is to offer a better solution in terms of efficiency, constructive simplicity and economic viability. The invention that achieves this purpose is a permanent magnet rotor as defined in independent claim 1.
In examples of the present disclosure, some of the aforementioned problems may be at least partially resolved.

### SUMMARY

A permanent magnet rotor is provided for an electrical machine having a stator and a rotor and an air gap arranged between the rotor and the stator. The rotor has a rotor body configured for rotating around a central rotational axis and further comprises permanent magnets that are substantially rectangular in axial cross-section and are inserted in a magnetic material. The magnets have an inner end and an outer end, the outer end of the magnet being arranged in the proximity of the air gap at the circumference of the rotor delimiting the air gap, and at least a portion of the outer end of the permanent magnets is not covered by the magnetic material.

The loss of magnetic flux at the outer end (close to the air gap) is minimized by the absence of magnetic material at a portion of the outer end of the permanent magnets. It may be regarded that the outer bridges on the of the permanent magnets. It may be regarded that the outer bridges on the outer ends of the magnets have been effectively eliminated. The magnetic flux of the permanent magnets is thus all directed from the rotor to the stator.

The rotor body comprises a rotor rim and a plurality of rotor modules attached to the rotor rim. In these embodiments using modules, assembly and maintenance is facilitated. Both for repair and manufacture, modules of magnets can be relatively easily inserted in place and removed.

The outer ends of the permanent magnets can extend between a first and a second corner, and the permanent magnets are retained inside the rotor body by projections/protrusions of the magnetic material at the first corner and/or at the second corner. The rotor body comprises a non-magnetic material covering at least a portion of the outer end of the permanent magnets. In these examples, a magnetic outer bridge is avoided while securely retaining the permanent magnets.

The disclosure provides a wind turbine comprising a generator having a rotor substantially as hereinbefore described. In some implementations, the wind turbine may be a direct drive wind turbine. In particular, the wind turbine may be an offshore direct drive wind turbine. In other implementations, the wind turbine could comprise a drive train with a gearbox.

### BRIEF DESCRIPTION OF THE DRAWINGS

Non-limiting examples of the present disclosure will be described in the following, with reference to the appended drawings, in which:
Figure 1 illustrates an electrical machine with a permanent magnet rotor according to an example;
Figures 2a and 2b illustrate an axial cross-section of examples of permanent magnet modules attached to a rotor rim;
Figures 3a - 3d illustrate further examples of permanent magnet modules attached to a rotor rim;
Figures 4a - 4c illustrate further examples of permanent magnet modules and permanent magnet rotors;

### DETAILED DESCRIPTION

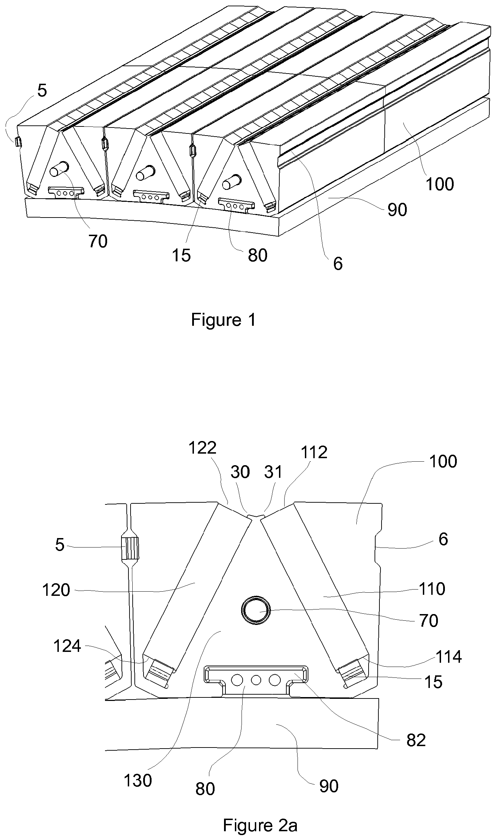

Figure 1 schematically illustrates a permanent magnet rotor of an electrical machine, e.g. a generator of a wind turbine. The rotor in this example may comprise a rim 90 and a plurality of modules 100 attached to the radially outer circumference of the rim 90. The use of modules may facilitate assembly and repair, particularly of large generators, such as generators that may be found on direct drive wind turbines.

Each module 100 may comprise a first and second permanent magnet 110 and 120 respectively arranged on a base 130. The base 130 has an upper portion with a substantially triangular cross-section with the permanent magnets arranged along the sides of the triangle.

The magnets may have a magnetic orientation normal to the long or to the short side of the magnet cross section. Due to the position of the magnets in the triangular like base, the magnetic flux between a permanent magnet 110 of a first module, and a permanent magnet 120 of another module may be concentrated towards the stator. Therefore, the pole pieces have a radial magnetization direction with respect to the axis of rotation.

First permanent magnet 110 extends between an inner end 114 and an outer end 112, the outer end being closer to the outer circumference of the rotor, i.e. the outer end is closer to the stator. Second permanent magnet 120 also comprises an inner end 124 and an outer end 122 as illustrated in figure 2a.

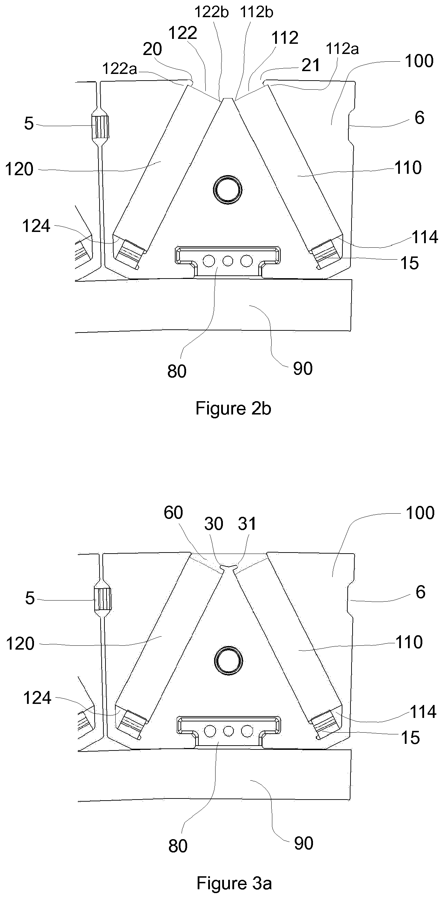

Moreover, outer ends 122 and 112 of the permanent magnets extend between a first and a second corner - 112a and 112b in the first magnet, and 122a and 122b in the second magnet - as illustrated in figure 2b.

Permanent magnets may be retained inside the rotor body by protrusions 20 and 21 of the magnetic material at the first corner 122a and 112a and protrusions 30 and 31 at the second corner 122b and 112b.

The inner ends 124 and 114 of the magnets are supported to the rotor body by a wedging element 15, as illustrated in figures 2a and 2b.

Figures 2a and 2b illustrate an axial cross-section of a permanent magnet module in accordance with examples. In this case, each module may comprise two rows of inserted permanent magnets, which are supported to the rotor through protrusions 30 and 31 in figure 2a, and 20 and 21 of the magnetic material and a wedging element 15 at the inner ends 124 and 114 of the magnets. Such wedging element may be a wedge, a spring or an element featuring analogous elastic properties. The purpose of these springs or other elastic elements is to properly fix the magnets in the rotor body, while absorbing the magnet's expansion due to temperature changes, as well as deformations due to mechanical stress.

Thus, permanent magnets may be securely fixed avoiding the use of adhesives or screws, resulting in a cleaner assembling procedure.

In the case of wedges, a first wedge may be inserted from a first side, e.g. the front side whereas a second wedge with a complementary shape to the first wedge may be inserted from an opposite side. The wedges can be advanced in opposite directions until they securely fix the magnets. Advancing the wedges may be carried out using suitable tools for pushing the wedges.

The difference between the examples of figures 2a and 2b is the shape of the protrusion which holds the magnets to the rotor body. The example of figure 2a may comprise protrusions 30 and 31 holding each magnet at the second corner 122b and 112b, whereas figure 2b may comprise protrusions holding each magnet at the first corner 122a and 112a.

At both the front and the rear end, the magnets may be sealed from the outside using e.g. end plates and/or epoxy resin.

In this embodiment, the side of the base may comprise grooves 6, which in this case may be formed by straight cut-outs. A connector 5 may be located between the grooves of at least two rotor modules which are adjacent in the vertical direction, as illustrated in figure 1. The connector between the grooves may be a compressed spring, a wedge or material featuring analogous elastic properties. This way the modules would behave as a continuous ring around the rotor structure, thus providing stiffness to such structure. Furthermore, these elastic elements would exert an opposite force that prevents the module 100 from separating on its upper side (that of the stator). While the rotor ensemble forming a ring features an electromagnetically optimal configuration, a risk of rotor deformation due to an eventual separation of the modules may exist, since neighboring modules repel each other. This is especially relevant in the case when modules are made of independent laminated pieces. Laminated pieces are lighter and therefore weaker than an integral piece constituting the module.

In all three examples shown in figures 2a - 2b, the bottom of the base 130 comprises T-shaped grooves which may be formed by straight cut-outs. T-shaped anchors 80 may sit substantially exactly in the grooves.

To assemble the rotor, the anchors 80 may be loosely attached at the circumference of the rotor rim. Then, the permanent magnet modules 100 may be inserted and slid on an anchor. Then, to fix the magnet modules in place, the bolts of the anchors may be tightened, so that the anchors press a portion of the base against the circumference of the rotor rim.

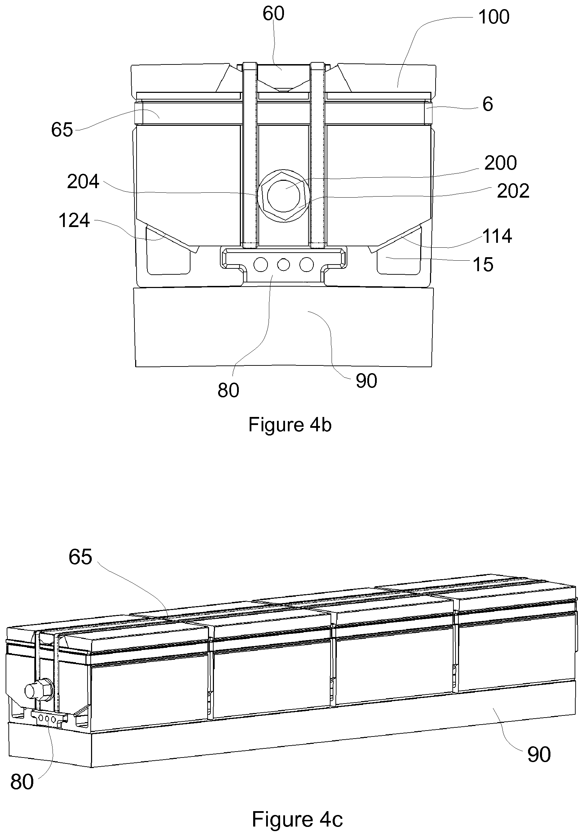

In some examples, the method may further comprise pressing the stacked metallic laminations to each other through a pressing mechanism. This pressing mechanism may comprise, for example, a stud 70 shown in figure 1 and one or more fasteners 202 and 204 configured to be fastened at one end or both ends of the stud, as illustrated in figure 4b.

In more particular examples, pressing the stacked metallic laminations may comprise arranging the stud 70 in such a way that the stud extends internally to the stack from one side to the opposite side of the stack, and fastening the one or more fasteners 202, 204 at one end or both ends of the stud.

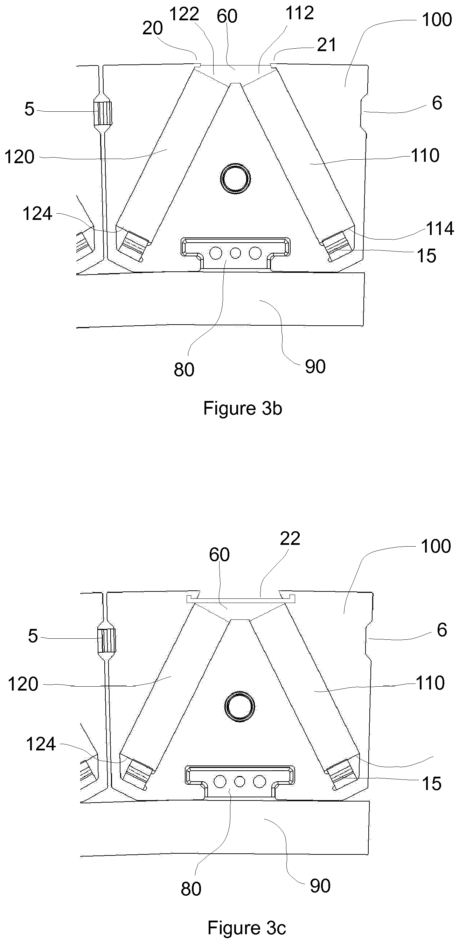

Figures 3a, 3b and 3c illustrate axial cross-sections of three examples of a permanent magnet module attached to a rotor rim. In these examples, the rotor body may comprise a non-magnetic material 60 covering at least a portion of the outer end of the permanent magnets. Such non-magnetic material may be e.g. resin, fiberglass or coated stainless steel.

The difference between embodiments 3a - 3c is the shape of the protrusion which holds the both the non-magnetic material 60 and the magnets to the rotor body. The example of figure 3a may comprise protrusions 30 and 31 analogous to those in figure 2a, holding each magnet and non-magnetic material at the second corner 122b and 112b. The example of figure 3b may comprise protrusions 30 and 31 analogous to those in figure 2b, holding each magnet at the first corner 122a and 112a. Figure 3c comprises a non-magnetic material horizontal bar acting as a top for each magnet at the first corner 122a and 112a.

In these examples, a magnetic outer bridge is avoided while securely retaining the permanent magnets. This disposition of the rotor elements may provide a higher mechanical robustness as compared to that in absence of the non-magnetic material, while yielding analogous flux losses reduction.

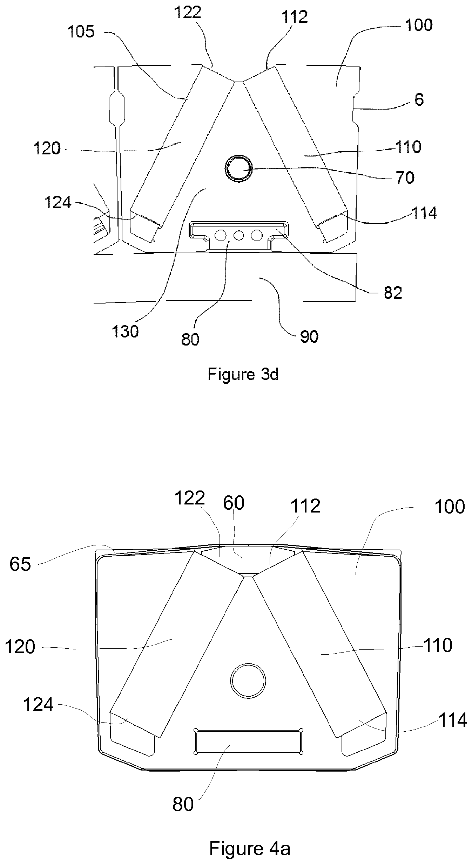

Figure 3d illustrates an axial cross-section of a permanent magnet module in accordance with yet a further embodiment of the present invention. In this case, the permanent magnets are attached to the rotor with glue 105 at their sides.

Figures 4a and 4b illustrate an axial cross-section of a permanent magnet module in accordance with yet a further embodiment of the present invention. In this embodiment, the non-magnetic material may be assembled to the rotor by means of a bandage 65 which may hold the magnet components. The bandage may be comprised of a plurality of straps distributed over the module cross-wise and/or long-wise. Such straps may be made of fiber reinforced plastic composite filament windings.

The cross-wise and long-wise bandage embodiment may further be seen in Figure 4c, which represents a longitudinal view of the module illustrated in figure 4b.

In yet another embodiment, one single strap can be rolled longitudinally along the rotor module in a helical fashion. Such a method may facilitate assembly and reduce production costs.

The permanent magnet module may be of substantially constant cross-section and may comprise a stack of metal sheets. The metal sheets of the stack may be welded stuck to each other, or may be joined e.g. by adhesives or by other mechanical means such as e.g. clamping bolts.

Such a laminated structure may reduce or avoid eddy currents if insulating material is provided between the metal sheets. The metal sheets may be formed by punching or e.g. laser cutting and may be glued together. Rectangular through-holes may be formed in the metal sheets so as to contain the rectangular permanent magnets. These holes may also be formed e.g. by punching or by laser cutting. In alternative embodiments, instead of a stack of metal sheets, an integral piece could be used.

Being the magnets inserted in this way reduces the part count and as a result of the reduction of components that are to be assembled, tolerances may automatically decrease.

Each of the modules may be attached to the rotor rim 90 by means of an anchor 80. Legs 82 of the base of the modules 100 may be pressed between a portion of the anchor 80 and the rotor rim. The anchors may be made from a substantially non-magnetic material.

The permanent magnets may be made from e.g. AINiCo steel (AluminiumNickel-Cobalt), or rare earth magnetic materials such as neodymium (NdFeB), or samarium-cobalt. The dimensions of the permanent magnets may be determined in accordance with the requirements of the generator (or motor), without taking into account any possible loss of magnetic flux. The absence of the magnetic outer bridges instead of the magnetic material bridges embedding the magnets known in the art, allows for an improved way to retain the magnets further reducing both magnetic losses through said bridges and material related costs. An improved cost-effective design of the permanent magnet rotor may thus be achieved.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A permanent magnet rotor for a generator of a wind turbine having a stator and a rotor and an air gap arranged between the rotor and the stator,
the rotor comprising a rotor body configured for rotating around a central rotational axis, the rotor body comprising a rotor rim (90) and a plurality of rotor modules (100) attached to the rotor rim (90), wherein the modules (100) comprise a base (130) and a first and a second permanent magnet (110, 120) arranged on the base (130);
wherein
the base (130) is made of a magnetic material and comprises an upper portion with a substantially triangular cross-section and rectangular through-holes, wherein the permanent magnets (110, 120) are contained in the rectangular through-holes and arranged along the sides of the triangular cross-section, in such a way that permanent magnets (110, 120) are inserted in the magnetic material and a magnetic flux between a permanent magnet (110) of a first rotor module (100) and a permanent magnet (120) of another rotor module (100) is concentrated towards the stator; and
the magnets (110, 120) are substantially rectangular in axial cross-section and have an inner end (114, 124) and an outer end (112, 122), the outer end (112, 122) of the magnet being arranged in the proximity of the air gap at the circumference of the rotor delimiting the air gap, and the outer end (112, 122) of each permanent magnet (110, 120) extend between a first (112a, 122a) and a second corner (112b, 122b), **characterized in that**
at least a portion of the outer end (112, 114) of the permanent magnets is not covered by the magnetic material, such that there is no magnetic material bridging the first (112a, 122a) and the second corners (112b, 122b) at the outer ends of the permanent magnets (110, 120) in order to prevent a magnetic outer bridge between the first (112a, 122a) and the second corners (112b, 122b); and **in that** the rotor body comprises a non-magnetic material (60) covering at least a portion of the outer end (112, 122) of the permanent magnets (110, 120), wherein
both the permanent magnets (110, 120) and the non-magnetic material (60) are retained inside the rotor body by projections/protrusions (20, 21, 30, 31) of the magnetic material of the base at the first corner (112a, 122a) and/or at the second corner (112b, 122b);
and **in that** the inner ends of the magnets (110, 120) are supported to the rotor body by a wedging element (15), wherein the wedging element (15) is a wedge, a spring or a material featuring analogous elastic properties.

2. A permanent magnet rotor according to claim 1 wherein the magnetic material of the rotor modules (100) comprises a stack of metallic sheets.

3. A permanent magnet rotor according to claim 1 wherein the magnetic material of the rotor modules (100) comprises a solid metallic module

4. A permanent magnet rotor according to any of claims 1 - 3, further comprising a side groove (6) along both sides of each of the rotor modules (100).

5. A permanent magnet rotor according to claim 4, wherein a connector (5) is located between the grooves (6) of at least two rotor modules (100) which are adjacent in the vertical direction, in order to provide stiffness to the rotor structure.

6. A permanent magnet rotor according to claim 5, wherein the connector (5) between the grooves (6) is a compressed spring, a wedge or material featuring analogous elastic properties.

7. A generator comprising a rotor according to any of claims 1-6.

8. A direct drive wind turbine comprising a generator according to claim 7.

## Patentansprüche

1. Permanentmagnetrotor für einen Generator einer Windkraftanlage mit einem Stator und einem Rotor und einem zwischen dem Rotor und dem Stator angeordneten Luftspalt,
wobei der Rotor einen Rotorkörper umfasst, der zum Drehen um eine zentrale Rotationsachse konfiguriert ist, wobei der Rotorkörper einen Rotorrand (90) und eine Vielzahl von Rotormodulen (100) umfasst, die an dem Rotorrand (90) befestigt sind, wobei die Module (100) eine Basis (130) und einen ersten und einen zweiten Permanentmagneten (110, 120) umfassen, die auf der Basis (130) angeordnet sind; wobei
die Basis (130) aus einem magnetischen Material hergestellt ist und einen oberen Abschnitt mit einem im Wesentlichen dreieckigen Querschnitt und rechteckigen Durchgangslöchern umfasst, wobei die Permanentmagneten (110, 120) in den rechteckigen Durchgangslöchern enthalten und entlang der Seiten des dreieckigen Querschnitts derart angeordnet sind, dass Permanentmagneten (110, 120) in das magnetische Material eingesetzt sind und ein magnetischer Fluss zwischen einem Permanentmagneten (110) eines ersten Rotormoduls (100) und einem Permanentmagneten (120) eines anderen Rotormoduls (100) zum Stator hin konzentriert ist; und
die Magneten (110, 120) einen im Wesentlichen rechteckigen axialen Querschnitt und ein inneres Ende (114, 124) und ein äußeres Ende (112, 122) aufweisen, wobei das äußere Ende (112, 122) des Magneten nahe dem Luftspalt am Umfang des Rotors, der den Luftspalt begrenzt, angeordnet ist und sich das äußere Ende (112, 122) jedes Permanentmagneten (110, 120) zwischen einer ersten (112a, 122a) und einer zweiten Ecke (112b, 122b) erstreckt, **dadurch gekennzeichnet, dass**
mindestens ein Abschnitt des äußeren Endes (112, 114) der Permanentmagneten nicht von dem magnetischen Material bedeckt ist, sodass kein magnetisches Material die erste (112a, 122a) und die zweite Ecke (112b, 122b) an den äußeren Enden der Permanentmagneten (110, 120) überbrückt, um eine äußere magnetische Brücke zwischen der ersten (112a, 122a) und der zweiten Ecke (112b, 122b) zu verhindern; und dass
der Rotorkörper ein nichtmagnetisches Material (60) umfasst, das mindestens einen Abschnitt des äußeren Endes (112, 122) der Permanentmagneten (110, 120) bedeckt, wobei
sowohl die Permanentmagneten (110, 120) als auch das nichtmagnetische Material (60) durch Auskragungen/Vorsprünge (20, 21, 30, 31) des magnetischen Materials der Basis an der ersten Ecke (112a, 122a) und/oder an der zweiten Ecke (112b, 122b) im Rotorkörper gehalten werden;
und dass die inneren Enden der Magneten (110, 120) durch ein Keilelement (15) am Rotorkörper gehalten wird, wobei das Keilelement (15) ein Keil, eine Feder oder ein Material mit analogen elastischen Eigenschaften ist.

2. Permanentmagnetrotor nach Anspruch 1, bei dem das magnetische Material der Rotormodule (100) einen Stapel von Metallblechen umfasst.

3. Permanentmagnetrotor nach Anspruch 1, wobei das magnetische Material der Rotormodule (100) ein massives Metallmodul umfasst.

4. Permanentmagnetrotor nach einem der Ansprüche 1 bis 3, ferner umfassend eine Seitennut (6) entlang beider Seiten jedes der Rotormodule (100).

5. Permanentmagnetrotor nach Anspruch 4, wobei zwischen den Nuten (6) von mindestens zwei in vertikaler Richtung benachbarten Rotormodulen (100) ein Verbinder (5) angeordnet ist, um der Rotorkonstruktion Steifigkeit zu verleihen.

6. Permanentmagnetrotor nach Anspruch 5, wobei der Verbinder (5) zwischen den Nuten (6) eine zusammengedrückte Feder, ein Keil oder ein Material mit analogen elastischen Eigenschaften ist.

7. Generator, umfassend einen Rotor nach einem der Ansprüche 1 bis 6.

8. Windkraftanlage mit Direktantrieb, umfassend einen Generator nach Anspruch 7.

## Revendications

1. Rotor à aimant permanent pour générateur d'éolienne comportant un stator et un rotor et un entrefer agencé entre le rotor et le stator,
le rotor comprenant un corps de rotor configuré pour tourner autour d'un axe de rotation central, le corps de rotor comprenant une jante de rotor (90) et une pluralité de modules de rotor (100) fixés à la jante de rotor (90), les modules (100) comprenant une base (130) et un premier et un second aimant permanent (110, 120) disposés sur la base (130) ; dans lequel
la base (130) est constituée d'un matériau magnétique et comprend une partie supérieure avec une section transversale sensiblement triangulaire et des trous traversants rectangulaires, les aimants permanents (110, 120) étant contenus dans les trous traversants rectangulaires et disposés le long des côtés de la section triangulaire, de telle sorte que des aimants permanents (110, 120) sont insérés dans le matériau magnétique et un flux magnétique entre un aimant permanent (110) d'un premier module de rotor (100) et un aimant permanent (120) d'un autre module de rotor (100) est concentré vers le stator ; et
les aimants (110, 120) ont une section transversale axiale sensiblement rectangulaire et présentent une extrémité interne (114, 124) et une extrémité externe (112, 122), l'extrémité externe (112, 122) de l'aimant étant disposée à proximité de l'entrefer sur la circonférence du rotor délimitant l'entrefer et l'extrémité extérieure (112, 122) de chaque aimant permanent (110, 120) s'étendant entre un premier (112a, 122a) et un second coin (112b, 122b), **caractérisé en ce que**
au moins une partie de l'extrémité externe (112, 114) des aimants permanents n'est pas recouverte par le matériau magnétique, de sorte qu'il n'y a pas de matériau magnétique reliant le premier (112a, 122a) et le second coin (112b, 122b) aux extrémités externes des aimants permanents (110, 120) afin d'empêcher un pont magnétique extérieur entre le premier (112a, 122a) et deuxième coins (112b, 122b) ; et **en ce que**
le corps de rotor comprend un matériau non magnétique (60) recouvrant au moins une partie de l'extrémité externe (112, 122) des aimants permanents (110, 120), dans lequel
les aimants permanents (110, 120) et le matériau non magnétique (60) sont retenus à l'intérieur du corps du rotor par des projections / saillies (20, 21, 30, 31) du matériau magnétique de la base au premier coin (112a, 122a) et / ou au deuxième coin (112b, 122b) ;
et **en ce que** les extrémités internes des aimants (110, 120) sont supportées sur le corps du rotor par un élément de calage (15), l'élément de calage (15) étant un coin, un ressort ou un matériau présentant des propriétés élastiques analogues.

2. Rotor à aimant permanent selon la revendication 1, dans lequel le matériau magnétique des modules de rotor (100) comprend un empilement de feuilles métalliques.

3. Rotor à aimant permanent selon la revendication 1, dans lequel le matériau magnétique des modules de rotor (100) comprend un module métallique solide.

4. Rotor à aimant permanent selon l'une quelconque des revendications 1 à 3, comprenant en outre une gorge latérale (6) le long des deux côtés de chacun des modules de rotor (100).

5. Rotor à aimant permanent selon la revendication 4, dans lequel un connecteur (5) est situé entre les gorges (6) d'au moins deux modules de rotor (100) adjacents dans la direction verticale, afin de fournir une rigidité à la structure du rotor.

6. Rotor à aimants permanents selon la revendication 5, dans lequel le connecteur (5) situé entre les gorges (6) est un ressort comprimé, un coin ou un matériau présentant des propriétés élastiques analogues.

7. Générateur comprenant un rotor selon l'une quelconque des revendications 1 à 6.

8. Éolienne à entraînement direct comprenant un générateur selon la revendication 7.
